# EUROPÄISCHE PATENTSCHRIFT

(11) **EP 0 758 365 B1**
(45) Veröffentlichungstag und Bekanntmachung des Hinweises auf die Patenterteilung: **05.08.1998**
(21) Anmeldenummer: 95915056.6
(22) Anmeldetag: 06.04.1995
(51) Int. Cl.: C09D 167/08, C08G 63/48

(54) **VERFAHREN ZUR HERSTELLUNG VON WASSERVERDÜNNBAREN LUFTTROCKNENDEN LACKBINDEMITTELN UND DEREN VERWENDUNG**
PROCESS FOR PREPARING WATER-DILUTABLE, AIR-DRYING VARNISH BINDERS AND USE THEREOF
PROCEDE DE FABRICATION DE LIANTS POUR VERNIS SECHANT A L'AIR ET DILUABLES A L'EAU ET LEUR APPLICATION

(30) Priorität: 07.04.1994 AT 711/94
(43) Veröffentlichungstag der Anmeldung: 19.02.1997
(73) Patentinhaber: Vianova Resins Aktiengesellschaft, 8402 Werndorf (AT)
(72) Erfinder: BILLIANI, Johann, A-8042 Graz (AT); GOBEC, Michael, A-8010 Graz (AT)
(86) Internationale Anmeldenummer: AT9500071
(87) Internationale Veröffentlichungsnummer: WO9527762

(56) Entgegenhaltungen:
- EP-A- 0 295 403
- EP-A- 0 312 733

## Beschreibung

Die Erfindung betrifft ein Verfahren zur Herstellung von wasserverdünnbaren lufttrocknenden Lackbindemitteln auf der Basis von acryl- und vinylmodifizierten Alkydharzemulsionen und deren Verwendung zur Formulierung von oxidativ trocknenden Lacken.

In der EP 0267562 A2 werden (Meth)acryl- und/oder Vinylmonomere, die neben der C-C-Doppelbindung keine weiteren reaktionsfähigen Gruppen tragen, in Gegenwart einer wäßrigen Lösung spezieller Emulgatorharze, die Alkydharze, Urethanalkydharze oder Epoxidharzester sein können, polymerisiert.

Ähnlich zusammengesetzte modifizierte Alkydharze werden in der EP 0295403 A2 beschrieben, wobei zu ihrer Herstellung neben den herkömmlichen Rohstoffen spezielle Fettsäurecopolymerisate mitverwendet werden.

Mit den gemäß der EP 0267562 A2 und der EP 0295403 A2 erhaltenen Produkten lassen sich die lacktechnischen Forderungen an wasserverdünnbare lufttrocknende Lackbindemittel bezüglich Verarbeitbarkeit und Filmeigenschaften weitgehend erfüllen, doch werden zur Formulierung von glänzenden Decklacken noch immer, wenn auch in geringen Anteilen, organische Lösemittel, beispielsweise Glykolether, benötigt.

Es wurde nun gefunden, daß die gemäß der EP 0295403 A2 hergestellten Alkydharzemulsionen, wenn sie zusätzlich über spezifische (Meth)acrylatmonomere eingeführte Polyoxyalkylengruppen enthalten, auch ohne die Verwendung von "Colösemitteln" sehr gut als Bindemittel für hochglänzende Decklacke geeignet sind.

Die Erfindung betrifft demgemäß ein Verfahren zur Herstellung von wasserverdünnbaren lufttrocknenden Lackbindemitteln auf der Basis von acryl- und vinylmodifizierten Alkydharzemulsionen, welches dadurch gekennzeichnet ist, daß man
A) ein Monomerengemisch, welches

| | | |
|---|---|---|
| a1) | 25 bis 50 Gew.-% | ungesättigte Fettsäuren, |
| a2) | 10 bis 25 Gew.-% | Methacrylsäure, |
| a3) | 1 bis 15 Gew.-% | (Meth)acrylatmonomere, die Polyoxyalkylengruppen aufweisen, und |
| a4) | 25 bis 50 Gew.-% | andere (Meth)acrylat- und/oder Vinylmonomere, welche neben der C-C-Doppelbindung keine weiteren funktionellen Gruppen tragen, |

enthält, in Gegenwart eines radikalischen Initiators bis zu einem Umsatz von mindestens 95 Gew.-% polymerisiert und
B) in einem weiteren Reaktionsschritt

| | | |
|---|---|---|
| b1) | 33 bis 44 Gew.-% | Copolymerisat (A), |
| b2) | 20 bis 42 Gew.-% | ungesättigte Fettsäuren, |
| b3) | 10 bis 25 Gew.-% | Polyalkohole mit 2 bis 6 Hydroxylgruppen; |
| b4) | 10 bis 20 Gew.-% | aromatische und/oder aliphatische Dicarbonsäuren, |
| b5) | 0 bis 15 Gew.-% | cyclische und/oder polycyclische Carbonsäuren, |

wobei die Summen der Prozentzahlen für die Komponenten a1) bis a4) bzw. b1) bis b5) jeweils 100 ergeben müssen, mit der Maßgabe, daß in Stufe (B) die Komponenten b2) bis b5) bis zum Erreichen einer klaren Schmelze und einer Säurezahl von 3 bis 30 mg KOH/g vorverestert werden, zu einem modifizierten Alkydharz (B) umsetzt, welches, bezogen auf den Feststoff, einen Gehalt von 30 bis 70 Gew.-%, vorzugsweise von 40 bis 60 Gew.-%, an ungesättigten Fettsäuren, eine Grenzviskositätszahl von 8 bis 15 ml/g (Chloroform, 20°C) sowie eine Säurezahl von 25 bis 70 mg KOH/g aufweist, wobei die entsprechenden Carboxylgruppen zu mindestens 80 % von Methacrylsäureeinheiten des Copolymerisats (A) stammen, und das so erhaltene modifizierte Alkydharz (B) ohne Verwendung von organischen Lösemitteln in Wasser emulgiert.

Die Erfindung betrifft weiters die Verwendung der nach diesem Verfahren hergestellten Lackbindemittel zur Formulierung von wasserverdünnbaren, bei Temperaturen bis zu 100°C oxidativ trocknenden Lacken, welche auch ohne die Zugabe von organischen Lösemitteln sehr gut glänzende Lackfilme ergeben.

Zur Herstellung des Copolymerisats (A) werden die Monomere in den im Hauptanspruch angegebenen Mengenverhältnissen eingesetzt.

Als ungesättigte Fettsäuren (Komponente al) werden Fettsäuren mit einer Jodzahl über 135 (bevorzugt 160 bis 200) und mit überwiegend isolierter Stellung der Doppelbindungen verwendet. Geeignet sind beispielsweise Leinölfettsäure und Safflorfettsäure, gegebenenfalls in Abmischung mit bis zu 25 Gew.-% an dehydratisierter Rizinusölfettsäure oder einer vergleichbaren, durch Isomerisierung hergestellten Conjuenfettsäure.

Als (Meth) acrylatmonomere, die Polyoxyalkylengruppen aufweisen (Komponente a3), sind (Meth)acrylatverbindungen einsetzbar, welche mindestens drei Oxyalkylengruppen enthalten und der allgemeinen Strukturformel

CH₂ = CHR₁ - CO - O - (CH₂ - CHR₁ - O)ₙ - R₂

mit R₁ = H, CH₃; R₂ = H, CH₃, C₂H₅ und n = 3 bis 45 entsprechen.

Typische Beispiele solcher Verbindungen sind Ester der (Meth)acrylsäure mit Ethylenglykol- und/oder Propylenglykololigomeren, wobei die Ethylenglykol- und Propylenglykoleinheiten sowohl statistisch als auch in Blöcken angeordnet sein können.

Die anderen (Meth)acrylat- und/oder Vinylmonomere (Komponente a4), welche neben der C-C-Doppelbindung keine weiteren funktionellen Gruppen tragen, sind vorzugsweise solche (Meth)acrylverbindungen und aromatische Vinylverbindungen, die benzinlösliche Homopolymere bilden.

Geeignet sind Ester der (Meth)acrylsäure mit n-Butanol, Isobutanol, tert.-Butanol oder 2-Ethylhexanol und das Vinyltoluol. In Anteilen bis zu 30 Gew.-% können auch Monomere, welche benzinunlösliche Polymere bilden, wie Methylmethacrylat oder Styrol, mitverwendet werden.

Die Copolymerisation wird in bekannter Weise in Gegenwart eines geeigneten Initiators, wie tert.-Butylperbenzoat oder Dibenzoylperoxid, durchgeführt

In einem weiteren Reaktionsschritt werden

| | | |
|---|---|---|
| b1) | 33 bis 44 Gew.-% | Copolymerisat (A), |
| b2) | 20 bis 42 Gew.-% | ungesättigte Fettsäuren, |
| b3) | 10 bis 25 Gew.-% | Polyalkohole mit 2 bis 6 Hydroxylgruppen, |
| b4) | 10 bis 20 Gew.-% | aromatische und/oder aliphatische Dicarbonsäuren, |
| b5) | 0 bis 15 Gew.-% | cyclische und/oder polycyclische Carbonsäuren, |

wobei der gesamte Anteil der aus den Komponenten b1) und b2) stammenden ungesättigten Fettsäuren im Endprodukt 30 bis 70 Gew.-%, vorzugsweise 40 bis 60 Gew.-%, betragen soll und die Summe der Prozentzahlen für die Komponenten b1) bis b5) wiederum 100 ergeben muß, zu einem wasserverdünnbaren Alkydharz (B) umgesetzt.

Als ungesättigte Fettsäuren (Komponente b2) können in dieser Stufe pflanzliche und tierische Fettsäuren mit einer Jodzahl über 120 eingesetzt werden. Bevorzugt soll ein Teil der Doppelbindungen in konjugierter Stellung vorliegen. Geeignet sind Soja-, Leinöl-, Saffloröl-, Tallöl- sowie Rizinenfettsäure.

Als Polyole (Komponente b3) und Dicarbonsäuren (Komponente b4) kommen für die Herstellung der Alkydharze vor allem solche Produkte in Betracht, welche möglichst hydrolysestabile Esterbindungen eingehen, beispielsweise Trimethylolpropan, Pentaerythrit und Sorbit als Polyole und Isophthalsäure oder Terephthalsäure als Dicarbonsäuren.

Zur Regulierung der Filmhärte werden gegebenenfalls als Komponente b5) cyclische oder polycyclische Monocarbonsäuren, wie Benzoesäure oder Harzsäuren, verwendet.

Die Komponenten b2) bis b5) werden bis zum Erreichen einer klaren Schmelze und einer Säurezahl von 3 bis 30 mg KOH/g vorverestert. Nach Zugabe des Copolymerisats (A) wird die Veresterung bis zu einer Grenzviskositätszahl von 8 bis 15 ml/g (Chloroform, 20°C) sowie einer Säurezahl von 25 bis 70 mg KOH/g geführt, wobei der Endwert der Säurezahl so gewählt wird, daß diese zu mindestens 80 %, in der Praxis zu etwa 90 %, der Konzentration der aus der Methacrylsäure stammenden Carboxylgruppen entspricht. Da diese Säuregruppen in den Copolymerketten tertiäre Stellung aufweisen und somit sterisch behindert sind, kann angenommen werden, daß sie wesentlich langsamer als die anderen Carboxylgruppen verestern und nach Beendigung dqr Reaktion den Hauptanteil der freien Säuregruppen darstellen.

Die erfindungsgemäß hergestellten Alkydharze werden im Vakuum von restlichen inerten organischen Lösemitteln befreit. Die Herstellung der wäßrigen Emulsion erfolgt ohne die Verwendung von "Colösemitteln", wobei zur Neutralisation der Säuregruppen, neben dem bevorzugten Ammoniak, organische Amine und Alkalihydroxide geeignet sind.

Die zur Herstellung wasserverdünnbarer lufttrocknender Lacke verwendeten Pigmente, Füllstoffe und Hilfsstoffe, wie Sikkative, Hautverhinderungsmittel, Antiabsetzmittel, Entschäumer etc. sind dem Fachmann bekannt oder der einschlägigen Literatur zu entnehmen.

Die Herstellung der Lacke erfolgt zweckmäßig in der Weise, daß man die Emulsion mit den Pigmenten und Additiven mischt und den Ansatz in einem Mahlaggregat dispergiert.

Neben dem Streichauftrag können die Lacke auch durch Spritzen, Tauchen oder Fluten appliziert werden. Die Trocknung erfolgt gegebenenfalls bei Temperaturen bis ca. 100°C.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten. Die angegebenen Grenzviskositätszahlen (GVZ) wurden in Chloroform bei 20°C bestimmt und sie werden in ml/g angegeben.

### 1. Beispiele 1 bis 4 und Vergleichsbeispiel V

### 1.1. Herstellung der Copolymerisate (A1) bis (A4) und (VA)

Die Fettsäure und Xylol werden auf 135 bis 140°C erwärmt. Bei dieser Temperatur werden innerhalb von 6 bis 9 Stunden die Monomerenmischung und die Peroxidmischung gleichmäßig zugegeben. Nach Beendigung der Zugabe wird die Reaktionstemperatur beibehalten, bis die Rückstandsbestimmung einen mindestens 95 %igen Polymerisationsumsatz ergibt. Bei zu langsamen Reaktionsfortgang wird mit Peroxid korrigiert. Die Mengenverhältnisse der Ausgangsprodukte und die Säurezahlen der Copolymerisate, bezogen auf den Feststoff, sind in der Tabelle 1 zusammengefaßt. Das Vergleichsbeispiel (VA) ist identisch mit dem Copolymerisat C1 aus der EP 0267562 A2 bzw. EP 0295402 A2.

### 1.2. Herstellung der modifizierten Alkydharze (B1) bis (B4) und (VB)

Gemäß den Angaben in Tabelle 2 werden die Komponenten von Teil 1 bei 230°C bis zum Erreichen einer klaren Schmelze und einer Säurezahl von 3 bis 30 mg KOH/g vorverestert. Nach Zugabe von Teil 2 wird der Reaktionsansatz bei 200°C gehalten, bis die gewünschten Endwerte erreicht sind. Das Vergleichsbeispiel (VB) entspricht dem Alkydharz A1 aus der EP 0295402 A2.

### 1.3. Emulgierung der modifizierten Alkydharze (B1) bis (B4) und (VB)

100 Teile Alkydharz (auf Feststoff bezogen) werden nach Entfernung des verbliebenen organischen Lösemittels (aus dem Copolymerisat) bei 70°C mit einer wäßrigen NH₃-Lösung (150 Teile Wasser und ca. 5 Teile NH₃/25%ig in Wasser) emulgiert. Es ergeben sich milchige bis transparente Emulsionen mit einer ausgeprägten Strukturviskosität, einem pH-Wert von 8,2 bis 8,6 und einem Feststoffgehalt von ca. 40 Gew.-%.

**Tabelle 1**

| | (A1) | (A2) | (A3) | (A4) | (VA) |
|---|---|---|---|---|---|
| Leinölfettsäure | 31 | 28 | 22 | 33 | 30 |
| isomerisierte Linolsäure¹⁾ | | 2 | | 5 | |
| Safflorfettsäure | | 5 | | | |
| Xylol | 5 | 5 | | | 5 |

| Monomermischung: | | | | | |
|---|---|---|---|---|---|
| Isobutylmethacrylat | 25 | 26 | 36 | 25 | 32 |
| Vinyltoluol | 6 | | 8 | 3 | 6 |
| Methylmethacrylat | | | 1 | | |
| Styrol | | | 3 | 2 | |
| Ethyltriethylenglykolmethacrylat | 7 | 2 | 12 | 1 | |
| PPM5S²⁾ | | 6 | | | |
| MPEG 350³⁾ | | | | 2 | |
| Methacrylsäure | 21 | 24 | 13 | 20 | 21 |

| Peroxidmischung: | | | | | |
|---|---|---|---|---|---|
| Leinölfettsäure | 10 | 7 | 5 | 9 | 11 |
| tert.-Butylperbenzoat | 2 | 3 | 3 | 2 | 3 |

| Peroxidkorrektur: | | | | | |
|---|---|---|---|---|---|
| Dibenzoylperoxid 50%ig | 1 | 1 | 1 | 1 | 1 |
| Xylol | 5 | 5 | 10 | 10 | 5 |
| | | | | | |
| Säurezahl [mg KOH/g] | 209 | 231 | 135 | 213 | 209 |

| | | | | | |
|---|---|---|---|---|---|
| ¹⁾ ca. 50 % 9,11-Linolsäure | | | | | |
| ²⁾ Pentapropylenglykolmethacrylat | | | | | |
| ³⁾ Methoxy-Polyethylenglykol-350-Methacrylat | | | | | |

**Tabelle 2**

| | (B1) | (B2) | (B3) | (B4) | (VB) |
|---|---|---|---|---|---|
| Teil 1 | | | | | |
| Safflorfettsäure | 231 | | | | 231 |
| isomerisierte Linolsäure | 127 | 162 | 130 | 153 | 127 |
| Sojafettsäure | | 238 | 152 | 60 | |
| Trimethylolpropan | | 43 | | 235 | |
| Pentaerythrit | 133 | 108 | 108 | | 133 |
| Isophthalsäure | 116 | 103 | 100 | 176 | 116 |
| Benzoesäure | | | 76 | | |

| Teil 2 (Festsubstanz) | | | | | |
|---|---|---|---|---|---|
| (A1) | 393 | | | | |
| (A2) | | 346 | | | |
| (A3) | | | 434 | | |
| (A4) | | | | 376 | |
| (VA) | | | | | 393 |
| GVZ (ml/g] | 12,5 | 13,5 | 11,5 | 9,5 | 12,3 |
| Säurezahl [mg KOH/g] | 48 | 44 | 33 | 55 | 45 |

### 1.4. Herstellung von wasserverdünnbaren Lacken

Aus den Alkydharzemulsionen werden in bekannter Weise durch Vermahlen auf einer Rührwerkskugelmühle (Typ Dyno-Mill) Weißlacke in folgender Formulierung hergestellt:

| | |
|---|---|
| 250 | Harzemulsion, 40%ig |
| 1,5 | Ammoniaklösung, 25%ig in Wasser |
| 100 | TiO2, Rutiltyp |
| 1 | Kombinationstrockner, wasserverdünnbar |
| 2 | Antihautmittel (Oxim) |
| 1 | Entschäumer (silikonfrei) |
| 30 | Wasser |

Die Lacke werden, gegebenenfalls nach Einstellen des pH-Wertes auf 8,8 - 9,1 und Verdünnung auf die Applikationsviskosität, auf Bleche aufgetragen und nach einer Lufttrocknung von 24 Stunden bei Raumtemperatur visuell auf Glanz und Glanzschleier beurteilt.

Die mit den erfindungsgemäß hergestellten Alkydharzemulsionen formulierten Weißlacke zeigen einen sehr guten Glanz. Der Vergleichs-Weißlack weist einen geringeren Glanzgrad und einen deutlichen Glanzschleier auf.

## Patentansprüche

1. Verfahren zur Herstellung von wasserverdünnbaren lufttrocknenden Lackbindemitteln auf der Basis von acryl- und vinylmodifizierten Alkydharzemulsionen, **dadurch gekennzeichnet,** daß man
A) ein Monomerengemisch, welches
| | | |
|---|---|---|
| a1) | 25 bis 50 Gew.-% | ungesättigte Fettsäuren, |
| a2) | 10 bis 25 Gew.-% | Methacrylsäure, |
| a3) | 1 bis 15 Gew.-% | (Meth)acrylatmonomere, die Polyoxyalkylengruppen aufweisen, und |
| a4) | 25 bis 50 Gew.-% | andere (Meth)acrylat- und/ oder Vinylmonomere, welche neben der C-C-Doppelbindung keine weiteren funktionellen Gruppen tragen, |
enthält, in Gegenwart eines radikalischen Initiators bis zu einem Umsatz von mindestens 95 Gew.-% polymerisiert und
B) in einem weiteren Reaktionsschritt
| | | |
|---|---|---|
| b1) | 33 bis 44 Gew.-% | Copolymerisat (A), |
| b2) | 20 bis 42 Gew.-% | ungesättigte Fettsäuren, |
| b3) | 10 bis 25 Gew.-% | Polyalkohole mit 2 bis 6 Hydroxylgruppen, |
| b4) | 10 bis 20 Gew.-% | aromatische und/oder aliphatische Dicarbonsäuren, |
| b5) | 0 bis 15 Gew.-% | cyclische und/oder polycyclische Carbonsäuren, |
wobei die Summen der Prozentzahlen für die Komponenten a1) bis a4) bzw. b1) bis b5) jeweils 100 ergeben müssen, mit der Maßgabe, daß in Stufe (B) die Komponenten b2) bis b5) bis zum Erreichen einer klaren Schmelze und einer Säurezahl von 3 bis 30 mg KOH/g vorverestert werden, zu einem modifizierten Alkydharz (B) umsetzt, welches, bezogen auf den Feststoff, einen Gehalt von 30 bis 70 Gew.-%, vorzugsweise von 40 bis 60 Gew.-%, an ungesättigten Fettsäuren, eine Grenzviskositätszahl von 8 bis 15 ml/g (Chloroform, 20°C) sowie eine Säurezahl von 25 bis 70 mg KOH/g aufweist, wobei die entsprechenden Carboxylgruppen zu mindestens 80 % von Methacrylsäureeinheiten des Copolymerisats (A) stammen, und das so erhaltene modifizierte Alkydharz (B) ohne Verwendung von organischen Lösemitteln in Wasser emulgiert.

2. Verfahren nach Anspruch 1, dadurch gekennzeichnet, daß man als Komponente (a3) (Meth)acrylatmonomere einsetzt, welche mindestens drei Oxyalkylengruppen enthalten und der allgemeinen Strukturformel
CH₂ = CHR₁ - CO - O - (CH₂ - CHR₁ - O)ₙ - R₂
mit R₁ = H, CH₃; R₂ = H, CH₃, C₂H₅ und n = 3 bis 45
entsprechen.

3. Verwendung der gemäß den Ansprüchen 1 und 2 hergestellten Lackbindemittel zur Formulierung von wasserverdünnbaren, Lösungsmittelfreien, bei Temperaturen bis zu 100°C oxidativ trocknenden Lacken.

## Claims

1. Process for the preparation of water-dilutable air-drying coating binders based on acrylic-modified and vinyl-modified alkyd resin emulsions, characterized in that
A) a monomer mixture containing
| | | |
|---|---|---|
| a1) | from 25 to 50% by weight | of unsaturated fatty acids, |
| a2) | from 10 to 25% by weight | of methacrylic acid, |
| a3) | from 1 to 15% by weight | of (meth)acrylate monomers containing polyoxyalkylene groups, and |
| a4) | from 25 to 50% by weight | of other (meth)acrylate and/or vinyl monomers containing no functional groups other than the C-C double bond |
is polymerized in the presence of a free-radical initiator to a conversion of at least 95% by weight, and
B) in a further reaction step
| | | |
|---|---|---|
| b1) | from 33 to 44% by weight | of copolymer (A), |
| b2) | from 20 to 42% by weight | of unsaturated fatty acids, |
| b3) | from 10 to 25% by weight | of polyalcohols having 2 to 6 hydroxyl groups, |
| b4) | from 10 to 20% by weight | of aromatic and/or aliphatic dicarboxylic acids, |
| b5) | from 0 to 15% by weight | of cyclic and/or polycyclic carboxylic acids, |
are reacted to form a modified alkyd resin (B), the sums of the percentages for components a1) to a4) and, respectively, b1) to b5) necessarily being 100 in each case, with the proviso that in stage (B) components b2) to b5) are pre-esterified until a clear melt and an acid number of from 3 to 30 mg of KOH/g are reached, said alkyd resin (B), based on the solids content, having a content of from 30 to 70% by weight, preferably from 40 to 60% by weight, of unsaturated fatty acids, an intrinsic viscosity of from 8 to 15 ml/g (chloroform, 20°C) and an acid number of from 25 to 70 mg of KOH/g, and at least 80% of the corresponding carboxyl groups deriving from methacrylic acid units of the copolymer (A), and the modified alkyd resin (B) thus obtained is emulsified in water without the use of organic solvents.

2. Process according to Claim 1, characterized in that as component (a3) use is made of (meth)acrylate monomers containing at least three oxyalkylene groups and corresponding to the general structural formula
CH₂ = CHR₁-CO-O-(CH₂-CHR₁-O)ₙ-R₂
where R₁ = H, CH₃; R₂ = H, CH₃, C₂H₅ and n = 3 to 45.

3. Use of the coating binders prepared in accordance with Claims 1 and 2 in the formulation of water-dilutable, solvent-free coating materials which dry oxidatively at temperatures of up to 100°C.

## Revendications

1. Procédé de préparation de liants pour peintures séchant à l'air et hydrodiluables à base d'émulsions de résines alkydes acryl- et vinyl-modifiées caractérisé en ce que l'on polymérise
A) un mélange de monomères qui contient
| | | |
|---|---|---|
| a1) | 25 à 50% en masse | d'acides gras insaturés, |
| a2) | 10 à 25% en masse | d'acide méthacrylique, |
| a3) | 1 à 15% en masse | de monomères (méth)acrylates qui comportent des groupes polyoxyalkylènes, et |
| a4) | 25 à 50% en masse | d'autres monomères (méth)acrylates et/ou vinyliques qui, outre la double liaison C-C, ne portent pas d'autres groupes fonctionnels, |
en présence d'un amorceur radicalaire jusqu'à un rendement d'au moins 95% en masse et
B) dans une autre étape réactionnelle on fait réagir
| | | |
|---|---|---|
| b1) | 33 à 44% en masse | de copolymère (A), |
| b2) | 20 à 42% en masse | d'acides gras insaturés, |
| b3) | 10 à 25% en masse | de polyalcools ayant 2 à 6 groupes hydroxyles, |
| b4) | 10 à 20% en masse | d'acides dicarboxyliques aromatiques et/ou aliphatiques, |
| b5) | 0 à 15% en masse | d'acides carboxyliques cycliques et/ou polycycliques, |
les sommes des pourcentages pour les composants a1) à a4) et b1) à b5) devant donner 100 dans chaque cas, avec la condition que, dans l'étape (B), les composants b2) à b5) soient pré-estérifiés jusqu'à l'obtention d'une masse fondue limpide et d'un indice d'acide de 3 à 30 mg de KOH/g, en une résine alkyde modifiée (B) qui, par rapport à la matière solide, présente une teneur en acides gras insaturés de 30 à 70% en masse, de préférence de 40 à 60% en masse, un indice de viscosité limite de 8 à 15 ml/g (chloroforme, 20°C) et un indice d'acide de 25 à 70 mg de KOH/g, les groupes carboxyles correspondants provenant à raison d'au moins 80% d'unités d'acide méthacrylique du copolymère (A), et la résine alkyde (B) modifiée ainsi obtenue s'émulsifiant dans l'eau sans utilisation de solvants organiques.

2. Procédé selon la revendication 1 caractérisé en ce que l'on utilise comme composant (a3) des monomères (méth)acrylates qui contiennent au moins trois groupes oxyalkylène et qui correspondent à la formule structurale générale
CH₂ = CHR₁ - CO - O - (CH₂ - CHR₁ - O)ₙ - R₂
avec R₁ = H, CH₃; R₂ = H, CH₃, C₂H₅ et n = 3 à 45.

3. Utilisation des liants pour peintures préparés selon les revendications 1 et 2 pour la formulation de peintures hydrodiluables, sans solvant, séchant par oxydation à des températures pouvant atteindre 100°C.
